# EUROPÄISCHE PATENTSCHRIFT

(11) **EP 2 001 774 B1**
(45) Veröffentlichungstag und Bekanntmachung des Hinweises auf die Patenterteilung: **02.04.2014**
(21) Anmeldenummer: 07722791.6
(22) Anmeldetag: 08.02.2007
(51) Int. Cl.: B29C 49/06, B29C 49/36

(54) **TRANSPORTSYSTEM FÜR FLASCHEN ODER DERGLEICHEN BEHÄLTER SOWIE ANLAGE ZUM BEHANDELN VON FLASCHEN ODER DERGLEICHEN BEHÄLTER**
TRANSPORTING SYSTEM FOR BOTTLES OR SIMILAR CONTAINERS, AND INSTALLATION FOR HANDLING BOTTLES OR SIMILAR CONTAINERS
SYSTEME DE TRANSPORT DE BOUTEILLES OU DE RECIPIENTS SIMILAIRES ET INSTALLATION DE TRAITEMENT DE BOUTEILLES OU DE RECIPIENTS SIMILAIRES

(30) Priorität: 24.03.2006 DE 102006013800
(43) Veröffentlichungstag der Anmeldung: 17.12.2008
(73) Patentinhaber: KHS GmbH, 44143 Dortmund (DE)
(72) Erfinder: BACKHAUS, Martin, 59423 Unna (DE); STIENEN, Thomas, 59425 Unna (DE)
(86) Internationale Anmeldenummer: PCT/EP2007/001066
(87) Internationale Veröffentlichungsnummer: WO 2007/110122

(56) Entgegenhaltungen:
- DE-A1- 19 824 846
- DE-A1- 19 922 873
- DE-A1- 19 928 325
- US-A- 5 996 322
- US-B1- 6 168 004

## Beschreibung

Die Erfindung bezieht sich auf ein Transportsystem gemäß Oberbegriff des Patentanspruchs 1.

Ein Transportsystem mit den Merkmalen des Oberbegriffs des Patentanspruches 1 ist bekannt (DE 198 24 846 A1). Das bekannte Transportsystem besteht im Wesentlichen aus einem von einem Transferstern gebildeten umlaufend antreibbaren Transportelement mit mehreren Behälteraufnahmen, die mit dem Transportelement an insgesamt drei in Transportelementumlauf- oder Transportrichtung aufeinander folgenden Übergabepositionen vorbei bewegt werden, von denen eine Übergabeposition zum Zuführen der Behälter aus der ersten Maschine an das Transportelement, eine Übergabeposition zum Weiterleiten der Behälter an eine zweite Maschine sowie die dritte Übergabeposition zum Weiterleiten der Behälter an wenigstens eine Pufferstrecke sowie auch zum Weiterleiten der Behälter aus der Pufferstrecke zurück an das Transportelement dienen. Nachteilig hierbei ist, dass es bei diesem Transportsystem nicht möglich ist, Behälter kontinuierlich an die Pufferstrecke zu fördern und aus der Pufferstrecke Behälter an das umlaufende Transportelement und damit an die zweite Maschine weiter zu leiten.

Ein vergleichbares Transportsystem ist aus der US 5,996,322 B bekannt geworden, bei welchem eine lineare Pufferstrecke an einer linearen Transportstrecke zwischen einer Blasmaschine und einem Behälterfüller angeordnet ist. Zu Vermeidung von Behälterkollisionen bei der Weichenumstellung für die Ein- oder Ausleitung von Behältern in oder aus der Pufferstrecke bzw. dem direkten Transport zwischen Blasmaschine und Füller, schlägt die US 5,996,322 B vor, die störenden Flaschen zu verwerfen, in dem diese erkannt und ausgeschleust werden.

Das erfindungsgemäße Transportsystem eignet sich insbesondere, aber nicht ausschließlich zum Transportieren von Flaschen oder dergleichen Behälter aus thermoplastischem Kunststoff, beispielsweise aus PET, zwischen einer Blasmaschine, in der die Behälter aus erhitzten Vorformlingen durch Streckblasen (Blasformen) hergestellt werden, und einem nachfolgenden Teil einer Gesamtanlage, z.B. einer nachgeschalteten Maschine, beispielsweise einer Füllmaschine.

Blasmaschinen zum Herstellen von Behältern aus thermoplastischem Kunststoff bestehen im Wesentlichen aus einer Heizstation, in der die Vorformlinge unter einer kontrollierten Temperaturführung aufgeheizt werden, sowie aus einer nachgeschalteten Blasstation, in der das Blasformen mit hoher Leistung erfolgt und die hierfür in der Regel aus einem um eine vertikale Maschinenachse umlaufend angetriebenen Rotor oder Blasrad mit einer Vielzahl von Blasformen besteht. Beide Prozessschritte, nämlich das Vorwärmen der Vorformlinge und das anschließende Blasformen sind direkt miteinander gekoppelt. Insbesondere ist auch die Heizstation u.a. hinsichtlich Heizleistung und Förderleistung an die Leistung der Blasstation angepasst. In der Praxis schließt sich an die Blasmaschine ein weiterer Teil einer Gesamtanlage an, beispielsweise eine Füllmaschine, die dann z.B. mit der Blasmaschine auch unmittelbar verblockt sein kann.

Insbesondere auch bei Blasmaschinen zum Herstellen von Flaschen ist es bei einem Stillstand oder einer Störung im nachgeschalteten Teil einer Gesamtanlage bzw. in der nachgeschalteten Maschine erforderlich, dass die Blasmaschine solang weiterläuft, bis die Blasformen der Blasstation vollständig entleert sind, d.h. die Blasmaschine vollständig leergelaufen ist. Je nach Ausgestaltung der, der Blasmaschine vorgeschalteten Heizstation und/oder dem Material der verwendeten Vorformlinge, kann es im Falle einer Störung ebenfalls erforderlich sein, dass auch die Heizstation leergefahren wird, d.h. die zum Zeitpunkt der Störung dort befindlichen Vorformlinge noch zu Flaschen geblasen werden.

Die Menge der hierbei betroffenen Vorformlinge und Flaschen entspricht dann durchaus derjenigen Menge an Vorformlingen bzw. Flaschen, die normalerweise in einem zweiminütigen störungsfreien Betrieb einer Blasmaschine verarbeitet bzw. hergestellt werden. Die bei diesem Leerlaufen der Blasmaschine erzeugten Flaschen müssen bei den bisher üblichen Anlagen ausgeschleust und verworfen werden.

Die Ursachen für Störungen in einem auf die Blasmaschine folgenden Teil einer Gesamtanlage oder in einer nachgeschalteten Maschine können sehr vielfältig sein, beispielsweise bedingt durch fehlende Betriebsmedien, fehlendes abzufüllendes Produkt in einer nachfolgenden Füllmaschine, Staus in anschließenden Transportsystemen, mechanische oder elektrische Fehler in komplexen Steuersystemen usw. Das Leerlaufen der Blasmaschine verursacht erhebliche Materialkosten, die sich bei Anlagen höherer Leistung und bei Dauerbetrieb durchaus jährlich zu einem sechsstelligen Euro-Betrag summieren können. Das Leerfahren der Blasmaschine bedeutet auch, dass eine Wiederaufnahme eines Füllprozesses nur deutlich verzögert erfolgen kann, da zunächst in der Blasmaschine erneut Vorformlinge erwärmt und aus diesen Flaschen geformt werden müssen.

Aufgabe der Erfindung ist es, ein Transportsystem aufzuzeigen, welches in einem kontinuierlichen Förderverfahren ein Ausschleusen von Behältern in eine Pufferstrecke sowie ein eventuell auch zeitgleiches Wieder-Einschleusen der Behälter aus der Pufferstrecke in den normalen Behälterförderstrom ermöglicht. Zur Lösung dieser Aufgabe ist ein Transportsystem entsprechend dem Patentanspruch 1 ausgebildet.

Das erfindungsgemäße Transportsystem ist speziell auch für den Transport von Flaschen oder dergleichen Behälter aus Kunststoff geeignet und dabei insbesondere auch in der Form, dass die Behälter hierbei an einem Behälter- oder Mündungsflansch hängend gehalten und transportiert werden. Weiterhin eignet sich das erfindungsgemäße Transportsystem insbesondere für den Transport von Flaschen oder Behältern zwischen einer Blasmaschine und einem nachgeschalteten Teil, beispielsweise einer nachgeschalteten Maschine einer Gesamtanlage. Bei Störungen oder bei einem Stillstand des nachgeschalteten Teils der Gesamtanlage ist es dann möglich, die beim Leerfahren der Blasmaschine anfallenden Flaschen oder Behälter in der Pufferstrecke aufzunehmen und diese Behälter nach dem Beheben der Störung an den nachgeschalteten Teil der Gesamtanlage bzw. an die nachgeschaltete Maschine ohne zeitliche Verzögerung weiterzuleiten und dadurch u.a. auch die Zeit, die für das wieder Anfahren der Blasmaschine erforderlich ist, zu überbrücken.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: einen als Flasche ausgebildeten und an einem Funktionselement eines Transportsystems hängend gehaltenen Behälter;
- Fig. 2 und 3: jeweils in schematischer Darstellung und in Draufsicht ein zwischen zwei Maschinen befindliches Transportsystem für Behälter gemäß Figur 1.

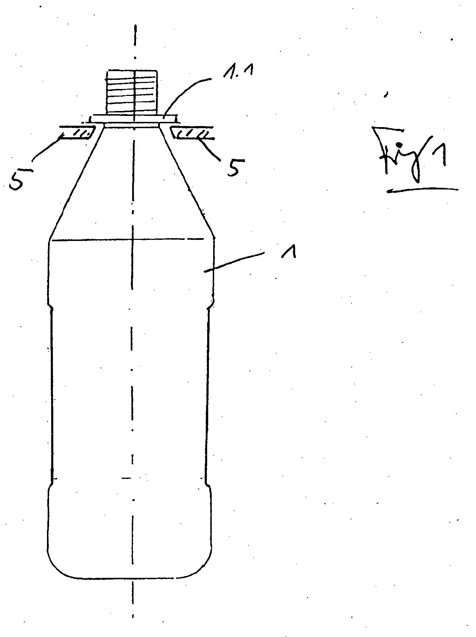

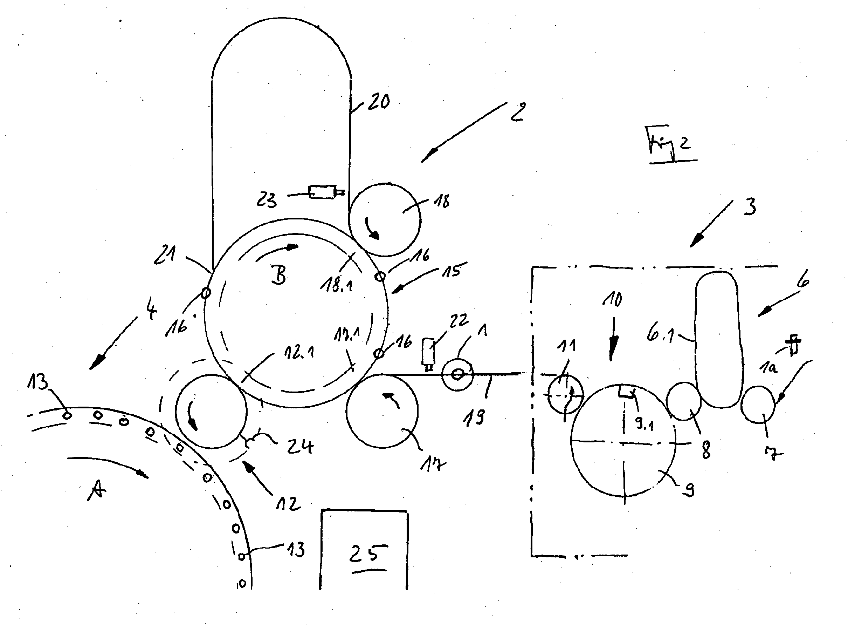

In den Figuren sind 1 Flaschen, die aus einem thermoplastischen Kunststoff, beispielsweise aus PET, durch Form- oder Streckblasen hergestellt sind, und die bei der in der Figur 2 dargestellten Ausführungsform über ein dort allgemein mit 2 bezeichnetes Transportsystem von einer ersten Blasmaschine 3 zum Herstellen bzw. Blasen der Flaschen 1 an eine nachfolgende zweite Maschine transportiert werden, welche beispielsweise eine Füllmaschine 4 umlaufender Bauart ist. Auf der gesamten Transportstrecke 2 werden die Flaschen 1 jeweils an einem Mündungsflansch 1.1 hängend an Führungen oder anderen Funktionselementen gehalten und geführt, wie dies in der Figur 1 insbesondere mit den Bezugszeichen 5 schematisch angedeutet ist.

Die Blasmaschine 3 weist den dem Fachmann bekannten Aufbau auf, d.h. diese Maschine besteht im Wesentlichen aus einer Heizstation 6, der die Vorformlinge 1 a aus dem thermoplastischen Material über einen Einlauf 7 zugeführt werden und in der diese Vorformlinge mittels eines Transporteurs 6.1 durch wenigstens eine Heizzone bewegt werden. Die somit erwärmten Vorformlinge 1a gelangen über einen Auslauf 8 an die an diesem Auslauf vorbeibewegten und auf einem umlaufenden Rotor 9 vorgesehenen Blasformen 9.1 einer Blasstation 10, in der aus den erwärmten Vorformlingen 1a durch Streckblasen die Flasche 1 erzeugt werden, die dann über den Auslauf 11 an das Transportsystem 2 gelangen.

Eine Funktion des Transportsystems 2 besteht darin, im normalen störungsfreien Betrieb die Flaschen 1 von der Blasmaschine 3 unmittelbar an die Füllmaschine 4 bzw. an den, den Einlauf dieser Maschine bildenden Einlaufstern 12 zu bewegen, über den die Flaschen 1 dann einzeln an jeweils eine der Füllpositionen 13 übergeben werden, die in der üblichen, dem Fachmann bekannten Weise am Umfang eines um eine vertikale Maschinenachse in Richtung des Pfeils A umlaufend angetriebenen Rotors 14 vorgesehen sind und an denen die Flaschen während des Füllprozesses 1 an ihrem Mündungsflansch 1.1 hängend gehalten sind.

Eine weitere Funktion des Transportsystems 2 besteht darin, im Falle eines Stillstandes oder einer Störung der Füllmaschine 4 die von der Blasmaschine 3 gelieferten Flaschen 1 zumindest solange zu puffern, bis bei gestoppter Zufuhr der Vorformlinge 1a an die Heizstation 6 letztere sowie auch die Blasstation 10 vollständig leer gefahren sind. Bei einer Störung in der nachfolgenden Füllmaschine 4 wird somit zwar die Blasmaschine 3 in der erforderlichen Weise leer gefahren, es ist aber nicht erforderlich, die hierbei anfallenden Flaschen 1 zu verwerfen bzw. aus dem System vollständig auszuschleusen.

Um diese Funktionen zu erfüllen, weist das Transportsystem als ein zentrales Element einen um eine vertikale Achse in Richtung des Pfeils B umlaufend antreibbaren Transport- oder Transferstern 15 auf, der an seinem Umfang mehrere Aufnahmen 16 zur hängenden Aufnahme jeweils einer Flasche 1 besitzt. Diesem Transportstern 15 sind zugeordnet der Einlaufstern 12 sowie zwei jeweils eine Behälter- oder Flaschenübergabe an den Transportstern 15 bildende Teilungssterne 17 und 18, die ebenfalls jeweils um eine vertikale Maschinenachse synchron mit dem Transportstern 15 antreibbar sind, und zwar derart, dass diese Teilungssterne 17 und 18 jeweils gegensinnig zum Transportstern 15 umlaufen. Der Teilungsstern 17 bildet das Ende einer Transportstrecke 19, die mit dem Auslauf 11 der Blasmaschine 3 in Verbindung steht. Der Teilungsstern 18 bildet das Ende einer Pufferstrecke 20, die sich zwischen einem Pufferstreckeneinlass 21 und dem Teilungsstern 18 erstreckt.

Die Anordnung ist dabei im dargestellten Ausführungsbeispiel so getroffen, dass der Teilungsstern 17 bzw. die von diesem gebildete Übergabeposition 17.1 und der Einlaufstern 12 bzw. die von diesem gebildete Abnahmeposition 12.1 in Drehrichtung B des Transfersternes 15 um einen Winkelbetrag kleiner als 180° gegeneinander versetzt sind und in Drehrichtung B die Abnahmeposition 12.1 auf die Übergabeposition 17.1 folgt. An die Abgabeposition 12.1 schließt sich in Drehrichtung B der Pufferstreckeneinlass 21 an, auf den dann in Drehrichtung B der Teilungsstern 18 bzw. die von diesem gebildete Übergabeposition 18.1 folgt und auf diese dann weiterhin in Drehrichtung B die Übergabeposition 17.1.

Die Transportstrecke 19 sowie die Pufferstrecke 21 sind bei der dargestellten Ausführungsform jeweils im Wesentlichen von einer Führung gebildet, in der die Flaschen 1 an ihrem Mündungsflansch 1.1 hängend gehalten sind und auf der diese Flaschen 1 beispielsweise durch Förderluft bzw. Druckluft bewegt werden.

An der Transportstrecke 19 ist am Einlauf zum Teilungsstern 17 ein elektrisch steuerbarer Stopper 22 vorgesehen, der im aktivierten Zustand die Transportstrecke 19 für die Bewegung der Flaschen 2 an den Teilungsstern 17 sperrt und im nicht aktivierten Zustand die Transportstrecke 19 für die Bewegung der Flaschen 1 an den Teilungsstern 17 freigibt. Ein entsprechender Stopper 23 ist an der Pufferstrecke 20 am Einlauf zum Teilungsstern 18 vorgesehen.

Die Arbeitsweise des Transportsystems 2 lässt sich, wie folgt, beschreiben:

Im normalen, störungsfreien Betrieb werden die über die Transportstrecke 19 angeförderten Flaschen 1 mit dem Teilungsstern 17 jeweils einzeln an eine Aufnahme 16 des Transfersternes 15 übergeben und gelangen dann über die Übergabeposition 12.1 und den Einlaufstern 12 an jeweils eine Füllposition 13 des Rotors 14. Im Falle einer Störung oder eines Stillstandes der Füllmaschine 4 werden die Flaschen 1 beispielsweise bis zum vollständigen Leerfahren der Blasmaschine 3 weiterhin über die Transportstrecke 19 und den Teilungsstern 17 an den Transferstern 15 bzw. dessen Aufnahmen 16 weitergeleitet, an der Übergabeposition 12.1 aber nicht an den Einlaufstern 12 weitergegeben. Die Flaschen gelangen vielmehr über den Pufferstreckeneinlass 21 in die Pufferstrecke 20, an der die Flaschen in Richtung Pufferstreckenauslass bzw. in Richtung Teilstern 18 bewegt werden, der allerdings beispielsweise durch den aktivierten Stopper 23 gesperrt ist.

Die Aufnahmekapazität der Pufferstrecke 20 ist so ausgelegt, dass in ihr zumindest sämtliche bei einem Leerfahren der Blasmaschine 3 anfallenden Flaschen 1 aufgenommen werden können. Während einer Störung sind der Transferstern 15 und die Teilungssterne 17 und 18 weiterhin umlaufend angetrieben. Beim Wieder-Anfahren der Füllmaschine 4 bzw. nach der Behebung einer Störung werden zunächst durch Deaktivierung des Stoppers 23, d.h. durch Freigeben des Teilungssternes 18 und durch Aktivierung des Stoppers 22, d.h. durch Sperren des Teilungssternes 17 die in der Pufferstrecke 20 aufgenommenen Flaschen 1 über den Teilungsstern 18 an den Transferstern 15 bzw. nacheinander an jeweils eine Aufnahme 16 weitergeleitet und gelangen dann mit dem umlaufenden Transferstern 15 an die Übergabeposition 12.1, an der die Flaschen 1 an den Einlaufstern 12 und von diesem an jeweils eine Füllposition 13 des Rotors 14 übergeben werden.

Sobald über die Transportstrecke 19 wiederum ausreichend Flaschen 1 zugeführt werden und auch die Pufferstrecke 20 entleert oder weitestgehend entleert ist, wird der Stopper 23 für ein Sperren des Teilungsstern 18 aktiviert und der Stopper 22 für ein Freigeben des Teilungssterns 17 deaktiviert, sodass die Flaschen 1, wie für den normalen störungsfreien Betrieb beschrieben, an die Füllmaschine 4 gelangen.

Um einerseits im störungsfreien Betrieb sowie auch beim Wieder-Anfahren der Füllmaschine 4 nach einem Stillstand oder einer Störung die über das Transferelement 15 bzw. dessen Transferstern 16 angeförderten Flaschen 1 an den Einlaufstern 12 weiterzuleiten und andererseits während einer Störung die Flaschen 1 über den Transferstern 15 an den Pufferstreckeneinlass 21 zu fördern, sind entsprechende Steuermittel vorgesehen. Diese sind beispielsweise von einem oder mehreren Ausstoßern gebildet, die im normalen störungsfreien Betrieb und beim Wieder-Anfahren der Füllmaschine 4 die Flaschen 1 an der Übergabeposition 12.1 in Aufnahmen oder Greifer 24 des Einlaufsternes 12 bewegen. Weiterhin ist es beispielsweise möglich, die Greifer 24 steuerbar auszubilden, so dass sie im Störungsfall die an der Übergabeposition 12.1 vorbeibewegten Flaschen 1 in den Aufnahmen 16 des Transfersternes 15 belassen, aus denen die Flaschen 1 dann am Pufferstreckeneinlass 21 durch entsprechende Führungsmittel zwangsweise herausbewegt und an die Pufferstrecke 20 bzw. deren Führung übergeben werden. Auch andere Mittel zur Steuerung der Flaschenübergabe oder -führung an den Einlaufstern 12 oder an diesem vorbei sind denkbar.

Die Steuerung der Stopper 22 und 23 sowie der Mittel zur Übergabe der Flaschen aus dem Transferstern 15 an den Einlaufstern 12 erfolgt beispielsweise durch eine die Gesamtanlage bzw. die Maschinen 3 und 4 steuernde und überwachende, z.B. rechnergestützte Steuer- und Überwachungselektronik 25.

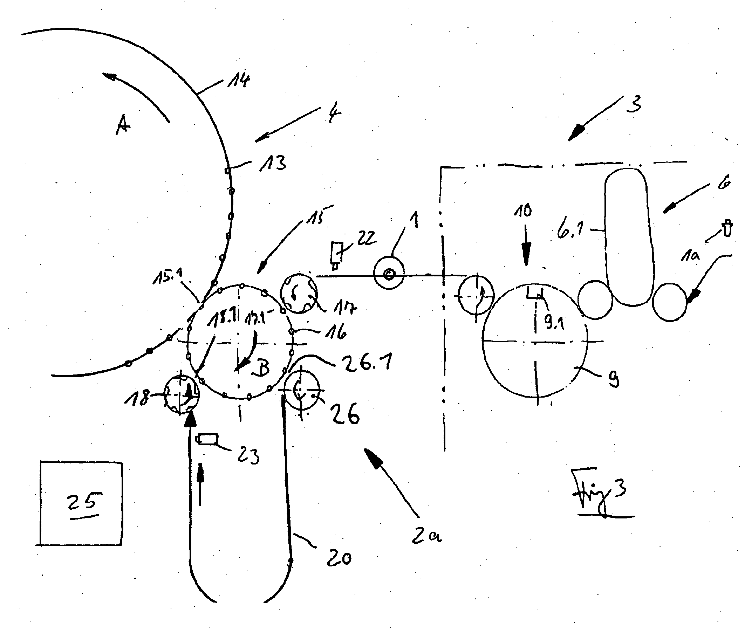

Die Figur 3 zeigt als weitere Ausführungsform ein Transportsystem 2a, welches sich von dem Transportsystem 2 im Wesentlichen dadurch unterscheidet, dass der Transferstern 15 zugleich den Einlauf der Füllmaschine 4 bzw. des die Füllpositionen 13 aufweisenden Rotors 14 bildet, der Einlaufstern 12 also entfallen ist. Dem Transferstern 15 sind wiederum zugeordnet der Teilungsstern 17 am Ende der Transportstrecke 19 und der Teilungsstern 18 am Ende der Pufferstrecke 20.

Zugeordnet ist dem Transferstern 15 weiterhin ein Abgabestern 26, der den Pufferstreckeneinlass bildet und der beispielsweise durch die Steuer- und Überwachungselektronik 25 derart steuerbar ist, dass über den Abgabestern 26 im Falle eines Stilltandes oder einer Störung der Füllmaschine 4 die Flaschen 1 aus dem Transferstern 15 in die Pufferstrecke 20 geleitet werden. Die Anordnung ist weiterhin so getroffen, dass in Drehrichtung B des Transfersternes 15 auf die Übergabeposition 17.1 zwischen dem Teilungsstern 17 und dem Transferstern 15 die Übergabeposition 18.1 zwischen dem Teilungsstern 18 und dem Transferstern 15, auf die Übergabeposition 18.1 die Übergabeposition 26.1 zwischen dem Übergabestern 26 und dem Transferstern 15 sowie auf die Übergabeposition 26.1 die Übergabeposition 15.1 zwischen dem Transferstern 15 und dem Rotor 14 bzw. den dortigen Füllpositionen 13 folgen. An der Transportstrecke 19 sowie an der Pufferstrecke 20 sind wiederum die steuerbaren Stopper 22 bzw. 23 vorgesehen.

Im normalen, störungsfreien Betrieb werden die Flaschen 1 bei dem Transportsystem 2a über die Transportstrecke 19 und den Transferstern 15 an die Füllpositionen 13 des Rotors 14 der Füllmaschine 4 gefördert. Im Falle eines Stillstandes oder einer Störung der Füllmaschine 4 werden die Flaschen 1 zumindest bis zum Leerfahren der Blasmaschine 3 über die Transportstrecke 19, den Teilungsstern 17, den Transferstern 15 und den zur Entnahme der Flaschen 1 aus den Aufnahmen 16 des Transfersternes 15 aktivierten Abgabestern 26 in die Pufferstrecke 20 geleitet. Nach dem Wieder-Anlaufen der Füllmaschine 4 bzw. nach dem Beheben einer Störung werden die Flaschen 1 aus der Pufferstrecke 20 über den Teilungsstern 17 und den Transferstern 15 der Füllmaschine 4 bzw. in Füllpositionen 13 am Rotor 14 zugeführt.

Beide Systeme 2 und 2a haben somit den Vorteil, dass die bei einem Stillstand oder bei einer Störung der Füllmaschine 4 und beim Leerfahren der Blasmaschine 3 anfallenden Flaschen nicht verworfen, sondern nach dem Beheben der Störung weiter verwendet werden. Beide Systeme 2 und 2a haben weiterhin auch den Vorteil, dass nach dem Beheben einer Störung in der Pufferstrecke 20 Flaschen 1 bereitstehen, sodass der Füllprozess beim Wieder-Anfahren der Füllmaschine 4 bzw. nach dem Beheben einer Störung verzögerungsfrei fortgesetzt werden kann.

### Bezugszeichenliste

- 1: Flasche
- 1.1: Mündungsflansch
- 1a: Vorformling
- 2, 2a: Transportsystem
- 3: Blasmaschine
- 4: Füllmaschine
- 5: Führungs- oder Transportelement
- 6: Heizstation
- 6.1: Transportelement
- 7: Einlauf
- 8: Auslauf
- 9: Rotor bzw. Blasrad
- 9.1: Blasform
- 10: Blasstation
- 11: Auslauf
- 12: Einlaufstern
- 12.1: Übergabeposition
- 13: Füllposition
- 14: Rotor
- 15: Transferstern
- 15.1: Übergabeposition
- 16: Aufnahme
- 17, 18: Teilungsstern
- 17.1, 18.1: Übergabeposition
- 19: Transportstrecke
- 20: Pufferstrecke
- 21: Pufferstreckeneinlass
- 22,23: Stopper
- 24: Greifer
- 25: Steuer- und Überwachungselektronik
- 26: Abgabestern
- 26.1: Übergabeposition

- A: Drehrichtung des Rotors 14
- B: Drehrichtung des Transfersternes 15

## Patentansprüche

1. Transportsystem für den Transport von Flaschen oder dergleichen Behälter (1) zwischen einer ersten Maschine, beispielsweise eine Blasmaschine (3) zum Herstellen der Behälter (1) aus Kunststoff, und einer zweiten Maschine, beispielsweise Füllmaschine (4), mit einer Transportstrecke (19), welche mit dem Auslauf (11) der ersten Maschine in Verbindung steht, mit wenigstens einem umlaufend antreibbaren Transportelement (15) mit mehreren Behälteraufnahmen (16), die mit dem Transportelement (15) an mehreren in einer Transportelementumlauf- oder Transportrichtung (B) aufeinander folgenden Übergabepositionen (12.1, 17.1, 18.1, 21, 26.1) vorbeibewegt werden, von den zumindest eine erste Übergabeposition (17.1) zum Zuführen der Behälter (1) aus der ersten Maschine (3) an das Transportelement (15) und eine zweite Übergabeposition (12.1, 15.1) zum Weiterleiten der Behälter (1) an die zweite Maschine dienen, wobei die erste Übergabeposition (17.1) das Ende der Transportstrecke (19) bildet, und eine dritte Übergabeposition (21, 26.1) zum Weiterleiten der Behälter (1) an wenigstens eine Pufferstrecke (20) sowie eine vierte Übergabeposition (18.1) zum Weiterleiten der Behälter (1) aus der Pufferstrecke (20) an das Transportelement (15) dienen, wobei die Übergabeposition (17.1) von einem ersten Tellungsstern (17) und die vierte Übergabeposition (18.1) von einem zweiten Teilungsstern (18) gebildet sind, **dadurch gekennzeichnet, dass** die dritte und vierte Übergabepositionen zwei verschiedenen Übergabepositionen sind, und an der Transportstrecke (19) am Einlauf zum ersten Teilungsstern (17) ein elektrisch steuerbarer Stopper (22) vorgesehen ist, mittels welchem im aktivierten Zustand die Transportstrecke (19) für die Bewegung der Behälter (1) sperrbar ist, und ein weiterer elektrischer Stopper (23) am Einlauf zum zweiten Teilungsstern (18) an der Pufferstrecke (20) vorgesehen ist.

2. Transportsystem nach Anspruch 1, **gekennzeichnet durch** Steuermittel zum gesteuerten Weiterleiten der Behälter (1) aus dem Transportelement (15) an einer Übergabeposition (12.1, 15.1) an die zweite Maschine oder an einer dritten Übergabeposition (21, 26.1) an die wenigstens eine Pufferstrecke (20).

3. Transportsystem nach einem der vorhergehenden Ansprüche, **dadurch gekennzeichnet, dass** das Transportelement (15) ein um eine vertikale Achse umlaufend antreibbarer Transport- oder Transferstern (15) mit am Umfang offenen Behälteraufnahmen (16) ist.

4. Transportsystem nach einem der vorhergehenden Ansprüche, **dadurch gekennzeichnet, dass** der die zweite Übergabeposition (12.1) bildende Transportstern der Behältereinlaufstern (12) der zweiten Maschine ist.

5. Transportsystem nach einem der vorhergehenden Ansprüche, **dadurch gekennzeichnet, dass** der die dritte Übergabeposition (26.1) bildende Transportstern ein Abgabestern (26) ist, an weichen sich der Einlass der wenigstens einen Pufferstrecke (20) anschließt bzw. welcher den Einlass der wenigstens einen Pufferstrecke (20) bildet.

6. Transportsystem nach einem der vorhergehenden Ansprüche, **dadurch gekennzeichnet, dass** dessen Funktionselemente zumindest zum großen Tell für eine Halterung und/oder Führung der Behälter (1) an einem Behälter- oder Mündungsflansch (1.1) ausgebildet sind.

7. Transportsystem nach einem der vorhergehenden Ansprüche, **dadurch gekennzeichnet, dass** das umlaufende Transportelement (15) sowie dessen Behälteraufnahmen (16) für eine Halterung und/oder Führung der Behälter (1) an einem Behälter- oder Mündungsflansch (1.1) ausgebildet sind.

8. Transportsystem nach einem der vorhergehenden Ansprüche, **dadurch gekennzeichnet, dass** bei Ausbildung der ersten Maschine als Blasmaschine (3) das Transportsystem derart steuerbar ist, dass bei einem Stillstand oder bei einer Störung In der zweiten Maschine die beim Leerfahren der Blasmaschine (3) gefertigten Behälter (1) über das Transportelement (15) in die Pufferstrecke (20) geleitet werden.

9. Transportsystems nach Anspruch 8, **dadurch gekennzeichnet, dass** das Transportsystem (2, 2a) derart steuerbar ist, dass nach dem Beheben der Störung In der zweiten Maschine während des Wieder-Anlaufens der Blasmaschine (3) zunächst Behälter- (1) aus der Pufferstrecke (20) über das Transport- oder Transferelement (15) und über eine Übergabeposition an die zweite Maschine weitergeleitet werden.

10. Transportsystem nach einem der vorhergehenden Ansprüche **dadurch gekennzeichnet, dass** das Transport- oder Transferelement (15) an einer zweiten Übergabeposition (15.1) unmittelbar an die zweite Maschine anschließt.

11. Transportsystem nach einem der vorhergehenden Ansprüche, **dadurch gekennzeichnet, dass** die Übergabepositionen (12.1, 17.1, 18.1, 26.1) in gleichen oder etwa gleichen Abständen an der Bewegungsbahn der Behälteraufnahmen (16) vorgesehen sind.

## Claims

1. Transport system for transporting bottles or similar containers (1) between a first machine, for example a blow moulding machine (3) for producing the containers (1) from plastic, and a second machine, for example a filling machine (4), comprising a transport route (19) which is connected to the outlet (11) of the first machine, comprising at least one transport element (15) which can be driven in rotation and has a plurality of container holders (16) which are moved by the transport element (15) past a plurality of handover positions (12.1, 17.1, 18.1, 21, 26.1) which follow one another in a transport element rotation direction or transport direction (B) and of which at least a first handover position (17.1) serves for feeding the containers (1) from the first machine (3) to the transport element (15) and a second handover position (12.1, 15.1) serves for forwarding the containers (1) to the second machine, the first handover position (17.1) forming the end of the transport path (19), and a third handover position (21, 26.1) serves for forwarding the containers (1) to at least one buffer route (20) and a fourth handover position (18.1) serves for forwarding the containers (1) from the buffer route (20) to the transport element (15), the handover position (17.1) being formed by a first separating starwheel (17) and the fourth handover position (18.1) being formed by a second separating starwheel (18), **characterised in that** the third and fourth handover positions are two different handover positions, and provided on the transport route (19) at the entry to the first separating starwheel (17) is an electrically controllable stopper (22), by means of which, in the activated state, the transport route (19) for moving the containers (1) can be stopped, and a further electrical stopper (23) is provided on the buffer route (20) at the entry to the second separating starwheel (18).

2. Transport system according to claim 1, **characterised by** control means for forwarding the containers (1) in a controlled manner from the transport element (15) at a handover position (12.1, 15.1) to the second machine or at a third handover position (21, 26.1) to the at least one buffer route (20).

3. Transport system according to any one of the preceding claims, **characterised in that** the transport element (15) is a transport starwheel or transfer starwheel (15) which can be driven in rotation about a vertical axis and which has container holders (16) that are open on the circumference.

4. Transport system according to any one of the preceding claims, **characterised in that** the transport starwheel which forms the second handover position (12.1) is the container inlet starwheel (12) of the second machine.

5. Transport system according to any one of the preceding claims, **characterised in that** the transport starwheel which forms the third handover position (26.1) is a discharge starwheel (26) which is adjoined by the inlet of the at least one buffer route (20) or which forms the inlet of the at least one buffer route (20).

6. Transport system according to any one of the preceding claims, **characterised in that** the functional elements thereof are designed at least largely for holding and/or guiding the containers (1) at a container flange or mouth flange (1.1).

7. Transport system according to any one of the preceding claims, **characterised in that** the rotating transport element (15) and the container holders (16) thereof are designed for holding and/or guiding the containers (1) at a container flange or mouth flange (1.1).

8. Transport system according to any one of the preceding claims, **characterised in that**, when the first machine is embodied as a blow moulding machine (3), the transport system can be controlled in such a way that, in the event of a stoppage or fault in the second machine, the containers (1) manufactured during the emptying of the blow moulding machine (3) are passed into the buffer route (20) via the transport element (15).

9. Transport system according to claim 8, **characterised in that** the transport system (2, 2a) can be controlled in such a way that, following the elimination of the fault in the second machine and during the restarting of the blow moulding machine (3), initially containers (1) from the buffer route (20) are forwarded to the second machine via the transport element or transfer element (15) and via a handover position.

10. Transport system according to any one of the preceding claims, **characterised in that** the transport element or transfer element (15) directly adjoins the second machine at a second handover position (15.1).

11. Transport system according to any one of the preceding claims, **characterised in that** the handover positions (12.1, 17.1, 18.1, 26.1) are provided at equal or approximately equal spacings on the movement path of the container holders (16).

## Revendications

1. Système de transport pour le transport de bouteilles ou de récipients similaires (1) entre une première machine, par exemple une machine de soufflage (3) servant à fabriquer les récipients (1) en matière plastique, et une deuxième machine, par exemple une machine de remplissage (4), comprenant une ligne de transport (19), qui est reliée à la sortie (11) de la première machine, comprenant au moins un élément de transport (15) pouvant être entraîné en rotation et doté de plusieurs logements pour récipients (16), lesquels sont amenés à passer devant plusieurs positions de transfert (12.1, 17.1, 18.1, 21, 26.1) se suivant les unes les autres dans une direction de rotation ou de transport de l'élément de transport (B) à l'aide de l'élément de transport (15), parmi lesquelles positions au moins une première position de transfert (17.1) sert à amener les récipients (1) de la première machine (3) à l'élément de transport (15) et une deuxième position de transfert (12.1, 15.1) sert à acheminer les récipients (1) à la deuxième machine, sachant que la première position de transfert (17.1) constitue l'extrémité de la ligne de transport (19), et une troisième position de transfert (21, 26.1) sert à acheminer les récipients (1) au niveau au moins d'une ligne tampon (20) ainsi qu'une quatrième position de transfert (18.1) sert à acheminer les récipients (1) de la ligne tampon (20) à l'élément de transport (15), sachant que la position de transfert (17.1) est formée par un premier système de répartition en étoile (17) et que la quatrième position de transfert (18.1) est formée par un deuxième système de répartition en étoile (18), **caractérisé en ce que** les troisième et quatrième positions de transfert sont deux positions de transfert différentes, et **en ce qu'**est prévu, au niveau de la ligne de transport (19), à l'entrée menant au premier système de répartition en étoile (17), un élément d'arrêt (22) à commande électrique, au moyen duquel la ligne de transport (19) prévue pour le déplacement des récipients (1) peut être bloquée dans l'état activé, et **en ce qu'**est prévu, un élément d'arrêt supplémentaire (23) électrique à l'entrée menant au deuxième système de répartition en étoile (18), au niveau de la ligne tampon (20).

2. Système de transport selon la revendication 1, **caractérisé par** des moyens de commande servant à acheminer de manière commandée des récipients (1) depuis l'élément de transport (15) au niveau d'une position de transfert (12.1, 15.1) à la deuxième machine ou, au niveau d'une troisième position de transfert (21, 26.1), à au moins une ligne tampon (20).

3. Système de transport selon l'une quelconque des revendications précédentes, **caractérisé en ce que** l'élément de transport (15) est un système de transport en étoile ou de transfert en étoile (15) pouvant être entraîné en rotation autour d'un axe vertical et doté de logements pour récipients (16) ouverts sur la périphérie.

4. Système de transport selon l'une quelconque des revendications précédentes, **caractérisé en ce que** le système de transport en étoile formant la deuxième position de transfert (12.1) est le système d'entrée de récipient en étoile (12) de la deuxième machine.

5. Système de transport selon l'une quelconque des revendications précédentes, **caractérisé en ce que** le système de transport en étoile formant la troisième position de transfert (26.1) est un système de distribution en étoile (26), auquel se raccorde l'entrée d'au moins une ligne tampon (20) ou qui forme l'entrée d'au moins une ligne tampon (20).

6. Système de transport selon l'une quelconque des revendications précédentes, **caractérisé en ce que** les éléments fonctionnels dudit système de transport sont réalisés au moins en grande partie pour une fixation et/ou un guidage des récipients (1) au niveau d'une bride de récipient ou d'embouchure (1.1).

7. Système de transport selon l'une quelconque des revendications précédentes, **caractérisé en ce que** l'élément de transport (15) en rotation ainsi que les logements pour récipients (16) de ce dernier sont réalisés pour une fixation et/ou un guidage des récipients (1) au niveau d'une bride de récipient ou d'embouchure (1.1).

8. Système de transport selon l'une quelconque des revendications précédentes, **caractérisé en ce que** lors de la réalisation de la première machine sous la forme d'une machine de soufflage (3), le système de transport peut être commandé de telle manière qu'en cas d'arrêt ou en cas dysfonctionnement de la deuxième machine, les récipients (1) finalisés lorsque la machine de soufflage (3) tourne à vide sont guidés dans la ligne tampon (20) par l'intermédiaire de l'élément de transport (15).

9. Système de transport selon la revendication 8, **caractérisé en ce que** le système de transport (2, 2a) peut être commandé de telle manière qu'une fois le dysfonctionnement corrigé dans la deuxième machine, des récipients (1) sont acheminés dans un premier temps, lors du redémarrage de la machine de soufflage (3), depuis la ligne tampon (20), par l'intermédiaire de l'élément de transport ou de transfert (15) et en passant par une position de transfert, à la deuxième machine.

10. Système de transport selon l'une quelconque des revendications précédentes, **caractérisé en ce que** l'élément de transport ou l'élément de transfert (15) se raccorde directement à la deuxième machine au niveau d'une deuxième position de transfert (15.1).

11. Système de transport selon l'une quelconque des revendications précédentes, **caractérisé en ce que** les positions de transfert (12.1, 17.1, 18.1, 26.1) sont prévues à des distances identiques ou à peu près identiques les unes des autres au niveau de la bande de déplacement des logements pour récipients (16).
